# EUROPEAN PATENT SPECIFICATION

(11) **EP 3 862 184 B1**
(45) Date of publication and mention of the grant of the patent: **04.03.2026**
(21) Application number: 19869887.0
(22) Date of filing: 27.09.2019
(51) Int. Cl.: B32B 7/12, B32B 27/08, B32B 27/32, B05D 7/00, B05D 7/24, B65D 65/40, C09D 5/02, C09D 175/04

(54) **LAMINATE AND LAMINATE PRODUCTION METHOD**
LAMINAT UND LAMINATHERSTELLUNGSVERFAHREN
STRATIFIÉ ET PROCÉDÉ DE PRODUCTION DE STRATIFIÉ

(30) Priority: 01.10.2018 JP 2018186472
(43) Date of publication of application: 11.08.2021
(73) Proprietor: Mitsui Chemicals, Inc., Tokyo 104-0028 (JP)
(72) Inventor: MIYANAGA, Tomoharu, Sodegaura-shi, Chiba 299-0265 (JP); FUKUDA, Kazuyuki, Sodegaura-shi, Chiba 299-0265 (JP); KOUDA, Chikako, Sodegaura-shi, Chiba 299-0265 (JP)
(74) Representative: Hoffmann Eitle
(86) International application number: PCT/JP2019/038128
(87) International publication number: WO 2020/071269

(56) References cited:
- WO-A1-2013/118562
- WO-A1-2015/016069
- WO-A1-2016/143889
- JP-A- 2007 320 219
- JP-A- 2015 044 396
- JP-A- 2016 008 266
- JP-A- 2017 030 150
- JP-A- 2017 030 150
- JP-A- 2017 222 863
- US-A1- 2012 016 075
- US-A1- 2018 037 005

## Description

### TECHNICAL FIELD

The present invention relates to a laminate and a producing method of a laminate, to be specific, to a laminate and a method for producing the laminate.

### BACKGROUND ART

In recent years, in the field of packaging materials, it has been desired to use a composite film of a single material due to a request of recycling and the like.

As such a composite film, a composite film in which olefin-based films are bonded together has been known, and more specifically, a composite film obtained in the following manner has been proposed: first, an adhesive for lamination prepared from an aqueous resin obtained by reacting an isocyanate group-terminated prepolymer having an anionic group and a chain extender and a water-dispersible polyisocyanate curing agent is applied to a corona-treated surface of a biaxially oriented polypropylene film (substrate) with an applicator so that an application amount thereof after water-drying is about 1.0 g/m² to evaporate water, and then, a polyurethane-based adhesive mixture is applied to be bonded to an unstretched polypropylene film (substrate) (ref: for example, Comparative Example 15 of Patent Document 1 below).

US 2018/037005 A1 describes a laminate film including a substrate, a polyurethane layer formed on the substrate, and a metal vapor deposition layer formed on the polyurethane layer. A coating liquid is applied on the substrate and dried to produce the polyurethane layer. The coating liquid contains a water dispersible polyisocyanate and a polyurethane dispersion containing polyurethane resin produced by reaction of an isocyanate group-terminated prepolymer with a chain extender. The isocyanate group-terminated prepolymer is produced by reaction of a polyisocyanate component including xylylene diisocyanate and/or hydrogenated xylylene diisocyanate and a polyol component including diol having 2 to 6 carbon atoms and an active hydrogen group-containing compound containing a hydrophilic group.

US 2012/016075 A1 describes a polyurethane dispersion that is obtained by aqueously dispersing an aqueous polyurethane resin obtained by reaction of an isocyanate group-terminated urethane prepolymer with a chain extender. The isocyanate group-terminated urethane prepolymer contains an adhesive urethane prepolymer for imparting adhesion and a gas-barrier urethane prepolymer for imparting gas barrier properties.

### Citation List

### Patent Document

Patent Document 1: International Publication WO2013/118526

### SUMMARY OF THE INVENTION

### PROBLEM TO BE SOLVED BY THE INVENTION

In the production of such a composite film of a single material, a polyethylene film may be used as a substrate for applying the adhesive for lamination instead of the polypropylene film of Patent Document 1.

In such a case, since the melting point of the polyethylene is lower than that of the polypropylene, it is necessary to dry the adhesive for lamination under conditions of lower temperature. Therefore, the drying properties are furthermore required.

In order to improve the drying properties, it is also examined to reduce an application amount of the adhesive for lamination, and in such a case, there is a problem that the gas barrier properties are lowered.

The present invention provides a laminate which has excellent drying properties at the time of production and also has excellent gas barrier properties, and a method for producing a laminate.

### MEANS FOR SOLVING THE PROBLEM

The present invention [1] includes a laminate including a polyethylene-based first film, a gas barrier layer, and a polyolefin-based second film in order, wherein the gas barrier layer is a coated and dried product of a coating composition containing a main agent and a curing agent containing a water-dispersible polyisocyanate, the main agent containing a polyurethane dispersion containing a polyurethane resin which is a reaction product of an isocyanate group-terminated prepolymer which is a reaction product of a polyisocyanate component and a polyol component containing a diol having 2 to 6 carbon atoms and an active hydrogen group-containing compound having a hydrophilic group, and a chain extender, the mass per unit area of the coated and dried product is 0.5 g/m² or more and 2.5 g/m² or less, the gas barrier layer is disposed on an upper surface of the first film, and the second film is disposed on an upper surface of the gas barrier layer, or the second film is disposed on an upper surface of the gas barrier layer via an adhesive layer.

The present invention [2] includes a method for producing a laminate including a preparation step of preparing a coating composition containing a main agent and a curing agent containing a water-dispersible polyisocyanate, the main agent containing a polyurethane dispersion containing a polyurethane resin which is a reaction product of an isocyanate group-terminated prepolymer which is a reaction product of a polyisocyanate component and a polyol component containing a diol having 2 to 6 carbon atoms and an active hydrogen group-containing compound having a hydrophilic group, and a chain extender, an application step of applying the coating composition obtained in the preparation step to a polyethylene-based first film so that the mass per unit area after drying is 0.5 g/m² or more and 2.5 g/m² or less, a drying step of obtaining a gas barrier layer by heating a coating film of the coating composition obtained in the application step at 20°C or more and 100°C or less to react the main agent and the curing agent, and a bonding step of bonding a polyolefin-based second film to the gas barrier layer, wherein, in the bonding step, the polyolefin-based second film is bonded to an upper surface of the gas barrier layer, or the polyolefin-based second film is bonded to an upper surface of the gas barrier layer via an adhesive layer.

### EFFECT OF THE INVENTION

According to the method for producing a laminate of the present invention, since the mass per unit area after drying is 2.5 g/m² or less, it is possible to obtain a laminate having excellent drying properties, even when it is heated and dried at 100°C or less which is a temperature at which a polyethylene-based first film can suppress damage caused by heat.

Further, the mass per unit area after drying is 0.5 g/m² or more. Therefore, the obtained laminate has excellent gas barrier properties.

The laminate of the present invention has excellent drying properties at the time of production, and has excellent gas barrier properties.

### BRIEF DESCRIPTION OF THE DRAWINGS

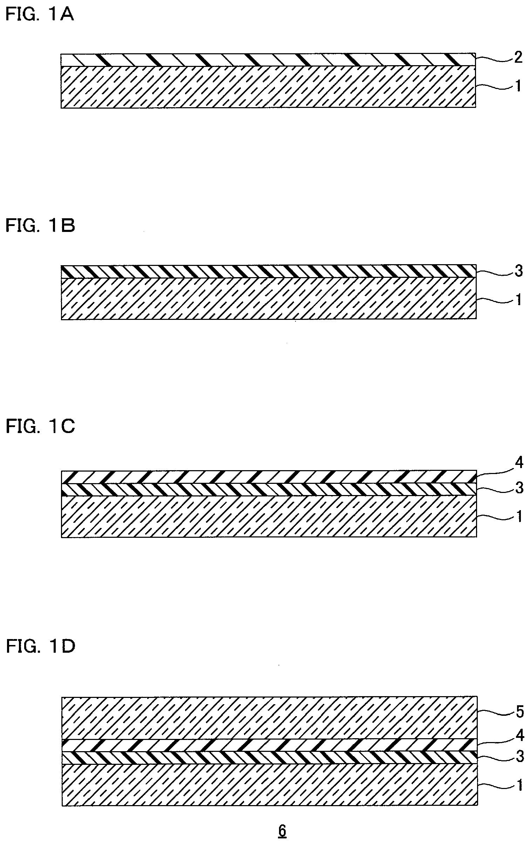

FIG. 1 shows a schematic view showing one embodiment of a method for producing a laminate of the present invention:
FIG. 1A illustrating an application step of applying a coating composition to a polyethylene-based first film,
FIG. 1B illustrating a drying step of heating a coating film of the coating composition to obtain a gas barrier layer,
FIG. 1C illustrating a step of forming an adhesive layer on a dried coating film, and
FIG. 1D illustrating a bonding step of bonding a polyolefin-based second film to the gas barrier layer.

### DESCRIPTION OF EMBODIMENTS

A laminate of the present invention is obtained by a method for producing a laminate including a preparation step of preparing a coating composition containing a main agent and a curing agent, an application step of applying the coating composition obtained in the preparation step to a polyethylene-based first film, a drying step of obtaining a gas barrier layer by heating a coating film of the coating composition obtained in the application step and reacting the main agent and the curing agent, and a bonding step of bonding a polyolefin-based second film to the gas barrier layer.

First, in the preparation step, a coating composition is prepared.

The coating composition contains a main agent and a curing agent.

The main agent contains a polyurethane dispersion, and preferably consists of a polyurethane dispersion.

The polyurethane dispersion is obtained by water-dispersing a polyurethane resin (aqueous polyurethane resin). In order to obtain the polyurethane resin, first, an isocyanate group-terminated prepolymer is prepared by reacting a polyisocyanate component with a polyol component, and then, the obtained isocyanate group-terminated prepolymer and a chain extender are reacted.

More specifically, first, the isocyanate group-terminated prepolymer is prepared by reacting the polyisocyanate component with the polyol component.

Examples of the polyisocyanate component include polyisocyanates such as an aromatic polyisocyanate, an araliphatic polyisocyanate, an alicyclic polyisocyanate, and an aliphatic polyisocyanate.

Examples of the aromatic polyisocyanate include aromatic diisocyanates such as 4,4'-, 2,4'-, or 2,2'-diphenylmethane diisocyanate and a mixture thereof (MDI), 2,4- or 2,6-tolylene diisocyanate and a mixture thereof (TDI), 4,4'-toluidine diisocyanate (TODI), 1,5-naphthalene diisocyanate (NDI), m- or p-phenylenediisocyanate and a mixture thereof, 4,4'-diphenyl diisocyanate, and 4,4'-diphenylether diisocyanate.

Examples of the araliphatic polyisocyanate include araliphatic diisocyanates such as 1,3- or 1,4-bis(isocyanatomethyl)benzene (also known as 1,3- or 1,4-xylylene diisocyanate) and a mixture thereof (XDI), 1,3 -or 1,4-tetramethylxylylene diisocyanate and a mixture thereof (TMXDI), and ω,ω'-diisocyanate-1,4-diethylbenzene.

Examples of the alicyclic polyisocyanate include alicyclic diisocyanates such as 3-isocyanatomethyl-3,5,5-trimethylcyclohexyl isocyanate (isophorone diisocyanate, IPDI), 4,4'-, 2,4'-, or 2,2'-methylenebis(cyclohexylisocyanate) and a mixture thereof (H₁₂MDI), 1,3- or 1,4-bis(isocyanatomethyl)cyclohexane and a mixture thereof (H₆XDI), bis(isocyanatomethyl)norbornane (NBDI), 1,3-cyclopentene diisocyanate, 1,4-cyclohexane diisocyanate, 1,3-cyclohexane diisocyanate, methyl-2,4-cyclohexane diisocyanate, and methyl-2,6-cyclohexane diisocyanate.

Examples of the aliphatic polyisocyanate include aliphatic diisocyanates such as hexamethylene diisocyanate (hexane diisocyanate) (HDI), pentamethylene diisocyanate (pentane diisocyanate) (PDI), tetramethylene diisocyanate, trimethylene diisocyanate, 1,2-, 2,3- or 1,3-butylene diisocyanate, and 2,4,4- or 2,2,4-trimethylhexamethylene diisocyanate.

In addition, examples of the polyisocyanate include a polyisocyanate derivative, a multimer of the above-described polyisocyanate (for example, a dimer, a trimer (for example, an isocyanurate modified product, an iminooxadiazinedione modified product), a pentamer, a heptamer, and the like), an allophanate modified product (for example, an allophanate modified product generated from a reaction of the above-described polyisocyanate with a low molecular weight polyol (described later) and the like), a polyol modified product (for example, a polyol modified product (alcohol adduct) generated from a reaction of a polyisocyanate with a low molecular weight polyol and the like), a biuret modified product (for example, a biuret modified product generated from a reaction of the above-described polyisocyanate with water and amines and the like), a urea modified product (for example, a urea modified product generated from a reaction of the above-described polyisocyanate with a diamine and the like), an oxadiazinetrione modified product (for example, an oxadiazinetrione generated from a reaction of the above-described polyisocyanate with a carbon dioxide gas and the like), a carbodiimide modified product (for example, a carbodiimide modified product generated from a decarboxylation condensation reaction of the above-described polyisocyanate and the like), a urethodione modified product, and a uretonimine modified product.

As the polyisocyanate, from the viewpoint of gas barrier properties, preferably, an araliphatic polyisocyanate and an alicyclic polyisocyanate are used, more preferably, an araliphatic polyisocyanate and an alicyclic polyisocyanate are used in combination or an alicyclic polyisocyanate is used alone, further more preferably, a 1,3-bis(isocyanatomethyl)benzene and a 4,4'-methylenebis(cyclohexylisocyanate) are used in combination or a 1,3-bis(isocyanatomethyl)cyclohexane is used alone.

When the polyisocyanate component contains the araliphatic polyisocyanate and the alicyclic polyisocyanate, a mixing ratio of the araliphatic polyisocyanate is, for example, 70 parts by mass or more, preferably 80 parts by mass or more, and for example, 95 parts by mass or less with respect to 100 parts by mass of the the total amount of the polyisocyanate component. Further, a mixing ratio of the alicyclic polyisocyanate is, for example, 5 parts by mass or more, and for example, 30 parts by mass or less, preferably 20 parts by mass or less with respect to 100 parts by mass of the total amount of the polyisocyanate component.

These polyisocyanates may be used alone or in combination of two or more.

The polyol component contains a diol having 2 to 6 carbon atoms and an active hydrogen group-containing compound having a hydrophilic group as an essential component.

The diol having 2 to 6 carbon atoms is an organic compound having 2 to 6 carbon atoms, having a number average molecular weight of 40 or more and 400 or less, and having two hydroxyl groups, and specifically, examples thereof include alkane diols having 2 to 6 carbon atoms (alkylene glycol having 2 to 6 carbon atoms) such as ethylene glycol, propylene glycol (1,2- or 1,3-propanediol and a mixture thereof), butylene glycol (1,2-, 1,3-, or 1,4-butanediol and a mixture thereof), 1,5-pentanediol, 1,6-hexanediol, neopentylglycol, 3-methyl-1,5-pentanediol, and 1,3- or 1,4-cyclohexanediol; ether diols having 2 to 6 carbon atoms such as diethylene glycol, triethylene glycol, and dipropylene glycol; and alkene diols having 2 to 6 carbon atoms such as 1,4-dihydroxy-2-butene.

As the diol having 2 to 6 carbon atoms, from the viewpoint of improving gas barrier properties, preferably, an alkane diol having 2 to 6 carbon atoms is used, more preferably, an ethylene glycol is used.

A mixing ratio of the diol having 2 to 6 carbon atoms is, for example, 50 parts by mass or more, preferably 60 parts by mass or more, and for example, 80 parts by mass or less, preferably 70 parts by mass or less with respect to 100 parts by mass of the total amount of the polyol component.

These diols having 2 to 6 carbon atoms may be used alone or in combination of two or more.

The active hydrogen group-containing compound having a hydrophilic group is a compound having a hydrophilic group such as a nonionic group or an ionic group, and having an active hydrogen group such as an amino group or ajhehydroxyl group, and specifically, examples thereof include an active hydrogen group-containing compound having a nonionic group and an active hydrogen group-containing compound having an ionic group.

An example of the active hydrogen group-containing compound having a nonionic group includes an active hydrogen group-containing compound having a polyalkylene oxide group (polyoxyalkylene group) as a hydrophilic group (nonionic group). More specifically, examples of the active hydrogen group-containing compound having a nonionic group include a polyoxyethylene glycol, a one end-sealed polyoxyethylene glycol, and a polyol having a polyoxyethylene side chain.

An example of the one end-sealed polyoxyethylene glycol includes an alkoxy polyoxyethylene monool whose one end is sealed with an alkyl group having 1 to 4 carbon atoms.

A number average molecular weight of the one end-sealed polyoxyethylene glycol is, for example, 200 or more, preferably 300 or more, and for example, 6000 or less, preferably 3000 or less.

A polyol having a polyoxyethylene side chain is an organic compound having a polyoxyethylene group in a side chain and having two or more hydroxyl groups, and can be synthesized as follows.

In other words, first, the above-described diisocyanate and the above-described one end-sealed polyoxyethylene glycol are subjected to a urethanization reaction at a ratio at which the isocyanate group of the diisocyanate is excessive with respect to a hydroxyl group of the one end-sealed polyoxyethylene glycol, and if necessary, an unreacted diisocyanate is removed, thereby obtaining a polyoxyethylene chain-including monoisocyanate.

Then, the polyoxyethylene chain-including monoisocyanate and a dialkanolamine (for example, a diethanolamine and the like) are subjected to a ureanization reaction at a ratio at which the isocyanate group of the polyoxyethylene group-containing monoisocyanate is substantially equal with respect to a secondary amino group of the dialkanolamine.

In the active hydrogen group-containing compound having a nonionic group, a number average molecular weight of a nonionic group, specifically, a polyoxyethylene group is, for example, 600 or more and 6000 or less.

As the diisocyanate for obtaining a polyol having a polyoxyethylene side chain, preferably, aliphatic diisocyanates such as hexamethylene diisocyanate (HDI) and alicyclic diisocyanates such as 1,4- or 1,3-bis(isocyanatomethyl)cyclohexane (H₆XDI), 3-isocyanatomethyl-3,5,5-trimethylcyclohexyl isocyanate (also known as isophorone diisocyanate) (IPDI), 4,4'-methylenebis(cyclohexyl isocyanate) (H₁₂MDI), and 2,6-bis(isocyanatomethyl)norbonane (NBDI) are used.

The active hydrogen group-containing compound having an ionic group is, for example, an organic compound having an anionic group such as carboxylic acid, a cationic group such as quaternary amine, and an active hydrogen group such as two or more hydroxyl groups or amino groups in combination, and preferably, an organic compound having an anionic group and two or more hydroxyl groups in combination is used, more preferably, an organic compound having one carboxylic acid and two hydroxyl groups in combination (active hydrogen group-containing compound having a carboxy group (for example, a carboxy group-containing polyol and the like)) is used.

Examples of the carboxy group-containing polyol include polyhydroxy alkanoic acids such as 2,2-dimethylolacetic acid, 2,2-dimethylollactic acid, 2,2-dimethylolpropionic acid (also known as dimethylolpropionic acid), 2,2-dimethylolbutanoic acid, 2,2-dimethylolbutyric acid, and 2,2-dimethylolvaleric acid, and preferably, a 2,2-dimethylolpropionic acid is used.

As the active hydrogen group-containing compound having a hydrophilic group, preferably, an active hydrogen group-containing compound having an ionic group is used, more preferably, a carboxy group-containing polyol is used, further more preferably, a polyhydroxyalkanoic acid is used, particularly preferably, a dihydroxy alkanoic acid is used.

By blending the polyhydroxy alkanoic acid, it is possible to improve the gas barrier properties and the adhesive properties with respect to the polyethylene-based first film.

These active hydrogen group-containing compounds having a hydrophilic group may be used alone or in combination of two or more.

A mixing ratio of the active hydrogen group-containing compound having a hydrophilic group is, for example, 20 parts by mass or more, preferably 25 parts by mass or more, and for example, 50 parts by mass or less, preferably 40 parts by mass or less with respect to 100 parts by mass of the total amount of the polyol component.

Also, the polyol component may furthermore contain another low molecular weight polyol (a low molecular weight polyol excluding a diol having 2 to 6 carbon atoms and an active hydrogen group-containing compound having a hydrophilic group) and a high molecular weight polyol as an optional component.

The other low molecular weight polyol is an organic compound having a number average molecular weight of 40 or more and 400 or less and having two or more hydroxyl groups in one molecule (excluding a diol having 2 to 6 carbon atoms and an active hydrogen group-containing compound having a hydrophilic group), and examples thereof include a diol having 7 or more carbon atoms (dihydric alcohol) and a trihydric or more low molecular weight polyol.

The diol having 7 or more carbon atoms (dihydric alcohol) is an organic compound having 7 or more carbon atoms, having a number average molecular weight of 40 or more and 400 or less, and having two hydroxyl groups in one molecule, and examples thereof include alkane-1,2-diol having 7 to 20 carbon atoms, 2,6-dimethyl-1-octene-3,8-diol, 1,3- or 1,4-cyclohexanedimethanol and a mixture thereof, hydrogenated bisphenol A, and bisphenol A.

Further, an example of the diol having 7 or more carbon atoms (dihydric alcohol) includes a dihydric polyalkylene oxide having a number average molecular weight of 400 or less. Such a polyalkylene oxide can be, for example, obtained as a polyethylene glycol (polyoxyethylene ether glycol), a polypropylene glycol (polyoxypropylene ether glycol), a polyethylene polypropylene glycol (random or block copolymer), and the like by subjecting an alkylene oxide such as an ethylene oxide and/or a propylene oxide to an addition reaction using the dihydric alcohol described above as an initiator. Further, an example thereof includes a polytetramethylene ether glycol having a number average molecular weight of 400 or less obtained by ring-opening polymerization of tetrahydrofuran and the like.

The trihydric or more low molecular weight polyol is an organic compound having a number average molecular weight of 40 or more and 400 or less and having three or more hydroxyl groups in one molecule, and examples thereof include trihydric alcohols (low molecular weight triols) such as glycerin, 2-methyl-2-hydroxymethyl-1,3-propanediol, 2,4-dihydroxy-3-hydroxymethylpentane, 1,2,6-hexanetriol, trimethylolpropane, and 2,2-bis(hydroxymethyl)-3-butanol; tetrahydric alcohols such as tetramethylolmethane (pentaerythritol) and diglycerin; pentahydric alcohols such as xylitol; hexahydric alcohols such as sorbitol, mannitol, allitol, iditol, dulcitol, altritol, inositol, and dipentaerythritol; heptahydric alcohols such as perceitol; and octahydric alcohols such as sucrose.

Further, an example of the trihydric or more low molecular weight polyol includes a trihydric or more polyalkylene oxide having a number average molecular weight of 40 or more and 400 or less. Such a polyalkylene oxide can be, for example, obtained as a polyethylene polyol, a polypropylene polyol, a polyethylene polypropylene polyol (random or block copolymer), and the like by subjecting an alkylene oxide such as ethylene oxide and/or propylene oxide to an addition reaction using the trihydric or more low molecular weight polyol described above or a known polyamine as an initiator.

As the other low molecular weight polyol, preferably, a trihydric or more low molecular weight polyol is used, preferably, a trihydric alcohol (low molecular weight triol) is used, more preferably, a trimethylolpropane is used.

When the trihydric or more low molecular weight polyol is blended, a mixing ratio of the trihydric or more low molecular weight polyol is, for example, 3 parts by mass or more, and for example, 10 parts by mass or less with respect to 100 parts by mass of the total amount of the diol having 2 to 6 carbon atoms and the trihydric or more low molecular weight polyol.

Further, a mixing ratio of the trihydric or more low molecular weight polyol is, for example, 5 parts by mass or more, preferably 10 parts by mass or more, and for example, 20 parts by mass or less, preferably 15 parts by mass or less with respect to 100 parts by mass of the total amount of the active hydrogen group-containing compound having a hydrophilic group and the trihydric or more low molecular weight polyol.

Further, a mixing ratio of the trihydric or more low molecular weight polyol is, for example, 2 parts by mass or more, and for example, 30 parts by mass or less, preferably 10 parts by mass or less, more preferably 7 parts by mass or less with respect to 100 parts by mass of the total amount of the polyol component.

These other low molecular weight polyols may be used alone or in combination of two or more.

The high molecular weight polyol is an organic compound having 2 or more hydroxyl groups and having a number average molecular weight of above 400, and examples thereof include a polyether polyol (for example, a polyoxyalkylene polyol such as a polypropylene glycol, a polytetramethylene ether polyol, and the like), a polyester polyol (for example, an adipic acid-based polyester polyol, a phthalic acid-based polyester polyol, a lactone-based polyester polyol, and the like), a polycarbonate polyol, a polyurethane polyol (for example, a polyol obtained by subjecting a polyether polyol, a polyester polyol, a polycarbonate polyol, and the like to urethane modification with a polyisocyanate), an epoxy polyol, a vegetable oil polyol, a polyolefin polyol, an acrylic polyol, and a vinyl monomer modified polyol.

These high molecular weight polyols may be used alone or in combination of two or more.

When the high molecular weight polyol is blended, from the viewpoint of gas barrier properties, a mixing ratio thereof is, for example, 50 parts by mass or less, preferably 40 parts by mass or less, more preferably 30 parts by mass or less, particularly preferably 10 parts by mass or less with respect to 100 parts by mass of the total amount of the polyol component.

From the viewpoint of gas barrier properties, the polyol component preferably does not contain the high molecular weight polyol, and more preferably consists of the diol having 2 to 6 carbon atoms described above, an active hydrogen group-containing compound having a hydrophilic group, and another low molecular weight polyol (preferably, a trihydric or more low molecular weight polyol), or consists of the diol having 2 to 6 carbon atoms described above and an active hydrogen group-containing compound having a hydrophilic group.

Then, in the reaction of the polyisocyanate component and the polyol component, each of the above-described components is reacted by a known polymerization method such as bulk polymerization and solution polymerization, preferably by solution polymerization in which the reactivity and the viscosity are more easily adjusted.

In this reaction, an equivalent ratio (isocyanate group/ hydroxyl group) of an isocyanate group in the polyisocyanate component to a hydroxyl group in the polyol component is, for example, 1.2 or more, preferably 1.3 or more, and for example, 3.0 or less, preferably 2.5 or less.

In the bulk polymerization, for example, the above-described components are blended and reacted under a nitrogen atmosphere.

As the reaction conditions, a reaction temperature is, for example, 60°C or more, and for example, 85°C or less, and the reaction time is one hour or more, and for example, 20 hours or less.

In the solution polymerization, for example, the above-described components are blended into an organic solvent to be reacted under a nitrogen atmosphere.

As the reaction conditions, a reaction temperature is, for example, 20°C or more, and for example, 80°C or less, and the reaction time is one hour or more, and for example, 20 hours or less.

The organic solvent is inert to an isocyanate group and rich in hydrophilicity, and examples thereof include acetone, methyl ethyl ketone, ethyl acetate, tetrahydrofuran, acetonitrile, and N-methylpyrrolidone.

In addition, in the above-described polymerization, a reaction catalyst such as amine-type, tin-type, and lead-type may be added if necessary, and an unreacted polyisocyanate may be also, for example, removed from the obtained isocyanate group-terminated prepolymer by a known method such as distillation and extraction.

Thus, an isocyanate group-terminated prepolymer which is a reaction product of a polyisocyanate component and a polyol component is obtained.

When the polyisocyanate component and the polyol component are reacted by solution polymerization, the isocyanate group-terminated prepolymer is obtained as an isocyanate group-terminated prepolymer reaction solution containing an isocyanate group-terminated prepolymer and an organic solvent.

In addition, when an ionic group is contained in the isocyanate group-terminated prepolymer, preferably, a neutralizing agent is added and neutralized to form a salt of the ionic group.

When the ionic group is an anionic group, examples of the neutralizing agent include conventional bases such as organic bases (for example, tertiary amines (trialkylamines having 1 to 4 carbon atoms such as trimethylamine and triethylamine, alkanolamines such as dimethylethanolamine, methyldiethanolamine, triethanolamine, and triisopropanol amine, heterocyclic amines such as morpholine, and the like)) and inorganic bases (ammonia, alkali metal hydroxides (lithium hydroxide, sodium hydroxide, potassium hydroxide, and the like), alkali earth metal hydroxides (magnesium hydroxide, calcium hydroxide, and the like), and alkali metal carbonates (sodium carbonate, potassium carbonate, and the like). These bases may be used alone or in combination of two or more.

The neutralizing agent is added at a ratio of 0.4 equivalents or more, preferably 0.6 equivalents or more, and for example, 1.2 equivalents or less, preferably 1 equivalent or less per 1 equivalent of anionic group.

The isocyanate group-terminated prepolymer thus obtained is a polyurethane prepolymer having at least one free isocyanate group at its molecular end. The content of the isocyanate group (isocyanate group content in terms of solid content excluding the solvent) is, for example, 0.3% by mass or more, preferably 0.5% by mass or more, more preferably 1.0% by mass or more, and for example, 20% by mass or less, preferably 15% by mass or less, more preferably 12% by mass or less, further more preferably 10% by mass or less.

In addition, an average functionality of the isocyanate group is, for example, 1.5 or more, preferably 1.9 or more, more preferably 2.0 or more, further more preferably 2.1 or more, and for example, 3.0 or less, preferably 2.5 or less.

As long as the average functionality of the isocyanate group is within the above-described range, it is possible to obtain a stable polyurethane dispersion, and ensure the adhesive properties and the gas barrier properties.

Further, a number average molecular weight (number average molecular weight by GPC measurement using standard polystyrene as a calibration curve) thereof is, for example, 500 or more, preferably 800 or more, and for example, 10000 or less, preferably 5000 or less.

Further, the hydrophilic group concentration of the isocyanate group-terminated prepolymer is, for example, 0.1 mmol/g or more, preferably 0.2 mmol/g or more, and for example, 1.2 mmol/g or less, preferably 1.0 mmol/g or less, more preferably 0.8 mmol/g or less.

When the hydrophilic group concentration of the isocyanate group-terminated prepolymer is within the above-described range, it is possible to obtain the stable polyurethane dispersion described above.

Thereafter, in this method, the isocyanate group-terminated prepolymer obtained by the description above and a chain extender are, for example, reacted in water to obtain a polyurethane dispersion of a polyurethane resin.

Examples of the chain extender include the low molecular weight polyol described above, an amino group-containing component, and a thiol group-containing component.

Examples of the amino group-containing component include amino group-containing compounds such as aromatic polyamine, araliphatic polyamine, alicyclic polyamine, aliphatic polyamine, amino alcohol, polyoxyethylene group-containing polyamine, alcoxysilyl compound having a primary amino group, or a primary amino group and a secondary amino group, and hydrazine or a derivative thereof.

Examples of the aromatic polyamine include 4,4'-diphenylmethanediamine and tolylene diamine.

Examples of the araliphatic polyamine include 1,3- or 1,4-xylylenediamine and a mixture thereof.

Examples of the alicyclic polyamine include 3-aminomethyl-3,5,5-trimethylcyclohexylamine (also known as isophoronediamine), 4,4' -dicyclohexylmethanediamine, 2,5(2,6)-bis(aminomethyl)bicyclo[2.2.1]heptane, 1,4-cyclohexanediamine, 1-amino-3-aminomethyl-3,5,5-trimethylcyclohexane, bis-(4-aminocyclohexyl)methane, diaminocyclohexane, 3,9-bis(3-aminopropyl)-2,4,8,10-tetraoxaspiro[5,5]undecane, and 1,3- and 1,4-bis(aminomethyl)cyclohexane and a mixture thereof.

Examples of the aliphatic polyamine include ethylenediamine, propylenediamine, 1,3-propanediamine, 1,4-butanediamine, 1,5-pentanediamine, 1,6-hexamethylenediamine, diethylenetriamine, triethylenetetramine, tetraethylenepentamine, 1,2-diaminoethane, 1,2-diaminopropane, and 1,3-diaminopentane.

Examples of the amino alcohol include 2-((2-aminoethyl)amino)ethanol (also known as N-(2-aminoethyl)ethanolamine) and 2-((2-aminoethyl)amino)-1-methylpropanol (also known as N-(2-aminoethyl)isopropanolamine).

Examples of the polyoxyethylene group-containing polyamine include polyoxyalkylene ether diamines such as polyoxyethylene ether diamine. More specifically, examples thereof include PEG#1000 diamine manufactured by NOF CORPORATION and JEFFAMINE ED-2003, EDR-148, and XTJ-512 manufactured by Huntsman Corporation.

Examples of the alkoxysilyl compound having a primary amino group, or a primary amino group and a secondary amino group include alkoxysilyl compounds having a primary amino group such as γ-aminopropyltrimethoxysilane, γ-aminopropyltriethoxysilane, and N-phenyl-γ-aminopropyltrimethoxysilane and alkoxysilyl compounds having a primary amino group and a secondary amino group such as N-β(aminoethyl)γ-aminopropyltrimethoxysilane (also known as N-2-(aminoethyl)-3-aminopropyltrimethoxysilane), N-β(aminoethyl)γ-aminopropyl triethoxysilane (also known as N-2-(aminoethyl)-3-aminopropyltriethoxysilane), N-β(aminoethyl)γ-aminopropylmethyldimethoxysilane (also known as N-2-(aminoethyl)-3-aminopropylmethyldimethoxysilane), and N-β(aminoethyl)γ-aminopropylmethyldiethoxysilane (also known as N-2-(aminoethyl)-3-aminopropylmethyldiethoxysilane).

Examples of the hydrazine and a derivative thereof include a hydrazine (including hydrate), a succinic dihydrazide, and an adipic dihydrazide.

These amino group-containing components may be used alone or in combination of two or more.

Examples of the thiol group-containing component include an aliphatic or alicyclic polythiol, and an aromatic polythiol.

Examples of the aliphatic or alicyclic polythiol include 1,2-ethanedithiol, 1,1-propanedithiol, 1,2-propanedithiol, 1,3-propanedithiol, 2,2-propanedithiol, 1,6-hexanedithiol, 1,1-cyclohexanedithiol, 1,2-cyclohexanedithiol, 1,1-bis(mercaptomethyl)cyclohexane, and 1,2,3-propanetrithiol.

Examples of the aromatic polythiol include 1,2-dimercaptobenzene, 1,3-dimercaptobenzene, 1,2-bis(mercaptomethyl)benzene, 1,3-bis(mercaptomethyl)benzene, and 1,4-bis(mercaptomethyl)benzene.

These thiol group-containing components may be used alone or in combination of two or more.

As the chain extender, preferably, an amino group-containing component is used, more preferably, an amino alcohol is used, further more preferably, a 2-((2-aminoethyl)amino)ethanol (also known as N-(2-aminoethyl)ethanolamine) is used.

Then, in order to react the isocyanate group-terminated prepolymer and the chain extender described above in water, for example, first, the isocyanate group-terminated prepolymer is water-dispersed by adding the isocyanate group-terminated prepolymer to water, and then, the chain extender is added thereto to chain-extend the isocyanate group-terminated prepolymer by the chain extender.

In order to water-disperse the isocyanate group-terminated prepolymer, the isocyanate group-terminated prepolymer is added under stirring of water at a ratio of 50 to 1000 parts by mass of water with respect to 100 parts by mass of the isocyanate group-terminated prepolymer.

Thereafter, the chain extender is added dropwise to water in which the isocyanate group-terminated prepolymer is water-dispersed under stirring so that an equivalent ratio (active hydrogen group/ isocyanate group) of the active hydrogen group (amino group and hydroxyl group) of the chain extender to the isocyanate group of the isocyanate group-terminated prepolymer is, for example, 0.6 to 1.2.

The chain extender may be also added dropwise, for example, as an aqueous solution, and after the completion of the dropwise addition, the reaction is, for example, completed at normal temperature while further stirring. The reaction time until the completion of the reaction is, for example, 0.1 hours or more, and for example, 10 hours or less.

Contrary to the description above, water may be also added into the isocyanate group-terminated prepolymer to water-disperse the isocyanate group-terminated prepolymer, and then, the chain extender may be added thereto to chain-extend the isocyanate group-terminated prepolymer by the chain extender.

In addition, in this method, if necessary, an organic solvent or water can be removed, and furthermore, water can be added to adjust the solid content concentration.

Thus, a polyurethane dispersion of a polyurethane resin which is a reaction product of the isocyanate group-terminated prepolymer and the chain extender is obtained.

The solid content concentration of the obtained polyurethane dispersion of the polyurethane resin is, for example, 10% by mass or more, preferably 15% by mass or more, more preferably 20% by mass or more, and for example, 60% by mass or less, preferably 50% by mass or less, more preferably 45% by mass or less.

A pH of the polyurethane dispersion is, for example, 6 or more, preferably 7 or more, more preferably 7.5 or more, and for example, 10 or less, preferably 9 or less.

The viscosity at 25°C of the polyurethane dispersion is, for example, 3 mPa·s or more, preferably 5 mPa·s or more, and for example, 2000 mPa·s or less, preferably 1000 mPa·s or less, more preferably 100 mPa·s or less, further more preferably 50 mPa·s or less.

An average particle size of the polyurethane dispersion is, for example, 10 nm or more, preferably 20 nm or more, and for example, 500 nm or less, preferably 300 nm or less, more preferably 100 nm or less.

Further, the total sum of the urethane group concentration and the urea group concentration of the polyurethane resin in the polyurethane dispersion is, for example, 25% by mass or more, preferably 30% by mass or more, more preferably 33% by mass or more, and for example, 50% by mass or less, preferably 47% by mass or less, more preferably 45% by mass or less.

The total sum of the urethane group concentration and the urea group concentration can be calculated from a charging ratio of raw material components.

An acid value of the polyurethane resin in the polyurethane dispersion is, for example, 12 mg KOH/g or more, preferably 15 mg KOH/g or more, and for example, 40 mg KOH/g or less, preferably 35 mg KOH/g or less.

Further, a number average molecular weight (number average molecular weight by GPC measurement using standard polystyrene as a calibration curve) of the polyurethane resin in the polyurethane dispersion is, for example, 1000 or more, preferably 3000 or more, and for example, 1000000 or less, preferably 100000 or less.

In addition, in the above-described reaction, various additives can be blended if necessary. Examples of the additive include a stabilizer (antioxidant, heat stabilizer, ultraviolet absorber, and the like), a plasticizer, an antistatic agent, a lubricant, an anti-blocking agent, a surfactant, a dispersion stabilizer, a colorant (pigment, dye, and the like), a filler, inorganic particles, inorganic oxide particles, and a crystal nucleating agent.

Further, a mixing ratio of the additive is not particularly limited, and is appropriately set in accordance with the purpose and the application.

Further, if necessary, a thermoplastic resin having gas barrier properties may be blended into the polyurethane dispersion as long as the gas barrier properties are not damaged.

Examples of the thermoplastic resin having gas barrier properties include a polyvinyl alcohol, an ethylene-vinyl alcohol copolymer, a polyvinylidene chloride or a vinylidene chloride copolymer, and polysaccharides such as starch and cellulose.

The curing agent contains a water-dispersible polyisocyanate.

Examples of the water-dispersible polyisocyanate include a water-dispersible blocked polyisocyanate and a water-dispersible non-blocked polyisocyanate, and preferably, a water-dispersible non-blocked polyisocyanate is used.

The water-dispersible non-blocked polyisocyanate can be, for example, obtained by dispersing a polyisocyanate having a hydrophilic group such as a polyethylene oxide group in water by a known dispersant (an ionic dispersant, a nonionic dispersant, and the like).

An example of the polyisocyanate constituting the water-dispersible polyisocyanate includes a polyisocyanate illustrated as the above-described polyisocyanate component, and specifically, examples thereof include the above-described aromatic polyisocyanate, the above-described araliphatic polyisocyanate, an aliphatic polyisocyanate, an alicyclic polyisocyanate, and a derivative of these.

The water-dispersible polyisocyanate is also available as a commercially available product, and specifically, examples thereof include TAKENATE WD-720, TAKENATE WD-725, TAKENATE WD-726, TAKENATE WD-220, TAKENATE XWD-HS7, and TAKENATE XWD-HS30 (hereinbefore, manufactured by Mitsui Chemicals, Inc.); Aquanate 100, Aquanate 110, Aquanate 200, and Aquanate 210 (hereinbefore, manufactured by Nippon Polyurethane Industry Co., Ltd.); DURANATE WB40-100 and DURANATE WT20-100 (hereinbefore, manufactured by Asahi Kasei Chemicals Corporation); Bayhydur 3100 and Bayhydur XP2487/1 (hereinbefore, manufactured by Bayer MaterialScience Ltd.); and Basonat HW100 and Basonat HA100 (hereinbefore, manufactured by BASF SE).

These water-dispersible polyisocyanates may be used alone or in combination of two or more.

Further, as the curing agent, for example, other curing agents such as a silane coupling agent, a melamine curing agent, a carbodiimide curing agent, an aziridine curing agent, and an oxazoline curing agent can be also used.

Examples of the silane coupling agent include a hydrolyzable alkoxysilane compound; halogen-containing alkoxysilanes (chloro C2-4 alkyltri C1-4 alkoxysilanes such as 2-chloroethyltrimethoxysilane, 2-chloroethyltriethoxysilane, 3-chloropropyltrimethoxysilane, and 3-chloropropyltriethoxysilane); epoxy group-containing alkoxysilanes [glycidyloxy C2-4 alkyltri C1-4 alkoxysilanes such as 2-glycidyloxyethyltrimethoxysilane, 2-glycidyloxyethyltriethoxysilane, 3-glycidyloxypropyltrimethoxysilane, and 3-glycidyloxypropyltriethoxysilane, glycidyloxydi C2-4 alkyldi C1-4 alkoxysilanes such as 3-glycidyloxypropylmethyldimethoxysilane and 3-glycidyloxypropylmethyldiethoxysilane, and (epoxycycloalkyl) C2-4 alkyltri C1-4 alkoxysilanes such as 2-(3,4-epoxycyclohexyl)ethyltrimethoxysilane, 2-(3,4-epoxycyclohexyl)ethyltriethoxysilane, and 3-(3,4-epoxycyclohexyl)propyltrimethoxysilane]; amino group-containing alkoxysilanes [amino C2-4 alkyltri C1-4 alkoxysilanes such as 2-aminoethyltrimethoxysilane, 3-aminopropyltrimethoxysilane, and 3-aminopropyltriethoxysilane, aminodi C2-4 alkyldi C1-4 alkoxysilanes such as 3-aminopropylmethyldimethoxysilane and 3-aminopropylmethyldiethoxysilane, (2-amino C2-4 alkyl)amino C2-4 alkyltri C1-4 alkoxysilanes such as 2-[N-(2-aminoethyl)amino]ethyltrimethoxysilane, 3-[N-(2-aminoethyl)amino]propyltrimethoxysilane, and 3-[N-(2-aminoethyl)amino]propyltriethylsilane, and (amino C2-4 alkyl)aminodi C2-4 alkyldi C1-4 alkoxysilanes such as 3-[N-(2-aminoethyl)amino]propylmethyldimethoxysilane and 3-[N-(2-aminoethyl)amino]propylmethyldiethoxysilane]; mercapto group-containing alkoxysilanes (mercapto C2-4 alkyltri C1-4 alkoxysilanes such as 2-mercaptoethyltrimethoxysilane, 3-mercaptopropyltrimethoxysilane, and 3-mercaptopropyltriethoxysilane and mercaptodi C2-4 alkyldi C1-4 alkoxysilanes such as 3-mercaptopropylmethyldimethoxysilane and 3-mercaptopropylmethyldiethoxysilane); vinyl group-containing alkoxysilanes (vinyltri C1-4 alkoxysilanes such as vinyltrimethoxysilane and vinyltriethoxysilane); and ethylenically unsaturated bonding group-containing alkoxysilanes [(meth)acryloxy C2-4 alkyltri C1-4 alkoxysilanes such as 2-(meth)acryloxyethyltrimethoxysilane, 2-(meth)acryloxyethyltriethoxysilane, 3-(meth)acryloxypropyltrimethoxysilane, and 3-(meth)acryloxypropyltriethoxysilane and (meth)acryloxydi C2-4 alkyldi C1-4 alkoxysilanes such as 3-(meth)acryloxypropylmethyldimethoxysilane and 3-(meth)acryloxypropylmethyldiethoxysilane].

These other curing agents may be used alone or in combination of two or more.

The curing agent preferably consists of a water-dispersible polyisocyanate.

Then, a coating composition is obtained by mixing a main agent containing the above-described polyurethane dispersion and a curing agent containing the above-described water-dispersible polyisocyanate.

In the coating composition, a mixing ratio of the polyurethane dispersion is, for example, 80 parts by mass or more, preferably 85 parts by mass or more, and for example, 95 parts by mass or less with respect to 100 parts by mass of the total amount of the resin component (solid content) in the polyurethane dispersion and the resin component (solid content) in the water-dispersible polyisocyanate. Further, a mixing ratio of the water-dispersible polyisocyanate is, for example, 5 parts by mass or more, and for example, 20 parts by mass or less, preferably 15 parts by mass or less.

When the mixing ratio of the polyurethane dispersion and the water-dispersible polyisocyanate is within the above-described range, it is possible to improve the adhesive properties and the gas barrier properties.

Also, if necessary, water can be removed from the coating composition, and furthermore, water can be added to adjust the solid content concentration.

In addition, a water-soluble organic solvent may be added to the coating composition, for example, in order to impart wettability to the polyethylene-based first film or to dilute the coating composition.

Examples of the water-soluble organic solvent include alcohols and ketones.

Examples of the alcohols include a monool and a glycol.

Examples of the monool include methanol, ethanol, 1-propanol, 2-propanol, isopropanol, butanol, 2-ethylhexyl alcohol, another alkanol (C5-38), aliphatic unsaturated alcohol (C9-24), alkenyl alcohol, 2-propene-1-ol, alkadienol (C6-8), and 3,7-dimethyl-1,6-octadiene-3-ol.

These monools may be used alone or in combination of two or more.

Examples of the glycol include an ethylene glycol, a propylene glycol, a glycerin, a diethylene glycol, and a dipropylene glycol.

These glycols may be used alone or in combination of two or more.

Examples of the ketones include an acetone and a methyl ethyl ketone.

These ketones may be used alone or in combination of two or more.

As the water-soluble organic solvent, preferably, a monool is used, more preferably, a 2-propanol is used.

A mixing ratio of the water-soluble organic solvent is, for example, 5 parts by mass or more, preferably 10 parts by mass or more, and for example, 40 parts by mass or less, preferably 30 parts by mass or less with respect to 100 parts by mass of the total amount of the polyurethane dispersion and the water-dispersible polyisocyanate.

The water-soluble organic solvent may be blended into the polyurethane dispersion or the water-dispersible polyisocyanate in advance, and may be blended at the time of mixing of the polyurethane dispersion and the water-dispersible polyisocyanate or after mixing of these.

In addition, various additives may be blended into the coating composition, if necessary. Examples of the additive include a silane coupling agent, an alkoxysilane compound, a stabilizer (antioxidant, heat stabilizer, ultraviolet absorber, and the like), a leveling agent, a plasticizer, an antistatic agent, a lubricant, an anti-blocking agent, a surfactant, a dispersion stabilizer, a colorant (pigment, dye, and the like), a filler, inorganic particles, inorganic oxide particles, and a crystal nucleating agent.

An addition ratio of the additive is appropriately set in accordance with the purpose and the application.

Further, the additive may be blended into the polyurethane dispersion or the water-dispersible polyisocyanate in advance, and may be blended at the time of mixing of the polyurethane dispersion and the water-dispersible polyisocyanate or after mixing of these.

Further, the solid content concentration of the coating composition is, for example, 0.5% by mass or more, preferably 1% by mass or more, and for example, 35% by mass or less, preferably 25% by mass or less.

Thus, a coating composition is prepared.

Subsequently, as shown in FIG. 1A, in the application step, the coating composition described above is applied to the upper surface of a polyethylene-based first film 1.

Examples of the polyethylene-based first film 1 include polyethylene-based films such as a low-density polyethylene film (LDPE), a straight-chain low-density polyethylene film (LLDPE), and a high-density polyethylene film (HDPE).

An application method of the coating composition is not particularly limited, and examples thereof include known coating methods such as a gravure coating method, a reverse coating method, a roll coating method, a bar coating method, a spray coating method, an air knife coating method, and a dipping method.

A thickness of a coating film 2 (that is, an application amount of the coating composition) is appropriately set so that the mass per unit area of the coating film 2 after drying (a gas barrier layer 3 (described later) (coated and dried product (described later)) is within a range to be described later.

Thus, the coating film 2 of the coating composition is obtained on the upper surface of the polyethylene-based first film 1.

Subsequently, as shown in FIG. 1B, in the drying step, the coating film 2 described above is dried by heating.

A drying temperature is 20°C or more, preferably 40°C or more, and 100°C or less, preferably 90°C or less.

When the drying temperature is the above-described lower limit or more, the coating film 2 can be dried, and as a result, it is possible to obtain a laminate 6 (described later).

On the other hand, when the drying temperature is below the above-described lower limit, the coating film 2 cannot be dried, and as a result, it is impossible to obtain the excellent laminate 6 (described later).

Further, when the drying temperature is the above-described upper limit or less, it is possible to suppress damage to the polyethylene-based first film 1 by heat.

On the other hand, when the drying temperature is above the above-described upper limit, the polyethylene-based first film 1 is damaged by heat. As a result, it is impossible to obtain the excellent laminate 6 (described later).

Further, the drying time is, for example, five seconds or more, preferably eight seconds or more, and for example, 10 minutes or less, preferably five minutes or less, more preferably one minute or less, further more preferably 30 seconds or less.

Thus, in the coating film 2 of the coating composition, the above-described main agent and the above-described curing agent react, and the gas barrier layer 3 (coated and dried product) of the coating composition is obtained on the upper surface of the polyethylene-based first film 1.

The mass per unit area of the gas barrier layer 3 (coated and dried product) is 0.5 g/m² or more, preferably 0.65 g/m² or more, more preferably 0.75 g /m² or more, further more preferably 1.5 g/m² or more, and 2.5 g/m² or less, preferably 2.1 g/m² or less.

When the above-described mass is the above-described lower limit or more, it is possible to obtain the laminate 6 (described later) having excellent gas barrier properties.

On the other hand, when the above-described mass is below the above-described lower limit, the gas barrier properties of the obtained laminate 6 (described later) are lowered.

Further, when the above-described mass is the above-described upper limit or less, the drying properties are excellent. Therefore, even when the drying temperature of the coating film 2 is low (specifically, even when it is 100°C or less), it is possible to obtain the laminate 6 (described later). Further, since the drying temperature of the coating film 2 can be lowered, it is possible to suppress damage to the polyethylene-based first film 1 by heat.

On the other hand, when the above-described mass is above the above-described upper limit, the drying properties are lowered. Therefore, when the drying temperature of the coating film 2 is low (specifically, when it is 100°C or less), the coating composition cannot be sufficiently dried, and it is impossible to obtain the excellent laminate 6 (described later).

In other words, when the above-described mass is below the above-described lower limit, though the drying properties can be improved, the gas barrier properties are lowered, and on the other hand, when the above-described mass is above the above-described upper limit, though the gas barrier properties can be improved, the drying properties are lowered.

In other words, by setting the above-described mass within the above-described predetermined range, it is possible to achieve both the gas barrier properties and the drying properties. Specifically, even when the drying temperature of the coating film 2 is low (specifically, even when it is 100°C or less), it is possible to improve the gas barrier properties, while the drying properties to such an extent that the coating composition can be dried are maintained.

Finally, in the bonding step, a polyolefin-based second film 5 is bonded to the gas barrier layer 3 described above from the viewpoint of a single material.

Examples of the polyolefin-based second film 5 include polyethylene-based films such as a low-density polyethylene film and a straight-chain low-density polyethylene film (LLDPE), polypropylene-based films such as an unstretched polypropylene film (CPP film), a uniaxially oriented polypropylene film, and a biaxially oriented polypropylene film (OPP film), and 4-methyl-1-pentene-based polymer films.

In other words, the polyolefin-based second film 5 and the polyethylene-based first film 1 are made of a single material as the same polyolefin-based film.

As the polyolefin-based second film 5, from the viewpoint of gas barrier properties, preferably, a polypropylene-based film is used, more preferably, an unstretched polypropylene film (CPP film) is used.

In addition, as the polyolefin-based second film 5, from the viewpoint of a single material in a narrow sense, preferably, a polyethylene-based film is used, more preferably, a straight-chain low-density polyethylene film (LLDPE) is used.

Then, in order to bond the polyolefin-based second film 5 to the gas barrier layer 3, as shown in FIG. 1C, a known adhesive is applied to the upper surface of the gas barrier layer 3 and dried to form an adhesive layer 4 made of an adhesive.

An example of the adhesive includes a two liquid-type curable urethane adhesive.

An application method of the adhesive is not particularly limited, and the same application method as that of the coating composition described above is used.

Then, as shown in FIG. 1D, the polyolefin-based second film 5 is bonded to the upper surface of the adhesive layer 4 and then, cured.

As the curing conditions, a curing temperature is, for example, 20°C or more, and for example, 50°C or less, and the curing time is, for example, one day or more, and for example, four days or less.

Thus, the gas barrier layer 3 and the polyolefin-based second film 5 are bonded (adhere) to each other via the adhesive layer 4.

Thus, the laminate 6 is obtained.

As shown in FIG. 1D, the laminate 6 includes the polyethylene-based first film 1, the gas barrier layer 3, the adhesive layer 4, and the polyolefin-based second film 5 in order.

In the laminate 6, the mass per unit area of the gas barrier layer 3 (coated and dried product) is 0.5 g/m² or more. Therefore, the gas barrier properties are excellent.

Further, in the laminate 6, the mass per unit area of the gas barrier layer 3 (coated and dried product) is 2.5 g/m² or less. Therefore, the drying properties at the time of production are excellent.

Therefore, such a laminate 6 is preferably used in packaging materials requiring gas barrier properties, specifically, packaging materials for medicine and the like, food packaging materials, optical films, industrial films, and the like, and above all, is preferably used as a food packaging material.

In the description above, a known adhesive is applied to the upper surface of the gas barrier layer 3, and the gas barrier layer 3 and the polyolefin-based second film 5 are bonded to each other. However, the present invention is not limited to this, and the polyolefin-based second film 5 can be also directly bonded to the upper surface of the gas barrier layer 3. In other words, in this method, the polyolefin-based second film 5 is bonded to the upper surface of the coating film 2 before drying, and then, the coating film 2 is dried under the above-described conditions.

In addition, another layer other than the gas barrier layer 3 and the adhesive layer 4 may be also disposed in this laminate. In such a case, from the viewpoint of recyclability, the content of the polyethylene in the laminate is, for example, 70% or more, preferably 80% or more, more preferably 90% or more.

Furthermore, in addition to the gas barrier layer 3, a vapor deposition layer made of a metal/metal oxide such as aluminum, alumina, and silica or another gas barrier layer made of a polymer resin such as a polyvinyl alcohol, an ethylene-vinyl alcohol copolymer, a polyvinylidene chloride or a vinylidene chloride copolymer, and polysaccharides such as starch and cellulose may be also disposed in this laminate.

Further, it is also possible to blend a layered inorganic compound into the coating composition and disperse the layered inorganic compound in the gas barrier layer 3.

Examples of the layered inorganic compound include a swellable layered inorganic compound and a non-swellable layered inorganic compound. From the viewpoint of gas barrier properties, preferably, a swellable layered inorganic compound is used.

The swellable layered inorganic compound is a clay mineral consisting of ultrathin unit crystals and having properties of coordinating or absorbing and swelling a solvent between unit crystal layers.

Specifically, examples of the swellable layered inorganic compound include hydrous silicates (phyllosilicate minerals and the like), kaolinite group clay minerals (halloysite, kaolinite, endelite, dickite, nacrite, and the like), antigorite group clay minerals (antigorite, chrysotile, and the like), smectite group clay minerals (montmorillonite, beidellite, nontronite, saponite, hectorite, sauconite, stevensite, and the like), vermiculite group clay minerals (vermiculite and the like), mica or mica group clay minerals (mica such as platinum mica and gold mica, margarite, tetrasililic mica, teniolite, and the like), and synthetic mica.

These swellable layered inorganic compounds may be natural clay minerals or may be also synthetic clay minerals. Further, they may be used alone or in combination of two or more, and preferably, a synthetic mica is used.

An average particle size of the layered inorganic compound is, for example, 50 nm or more, preferably 100 nm or more, and usually 100 µm or less, for example, 75 µm or less, preferably 50 µm or less. Further, an aspect ratio of the layered inorganic compound is, for example, 10 or more, preferably 20 or more, more preferably 100 or more, and for example, 5000 or less, preferably 4000 or less, more preferably 3000 or less.

Then, in order to form the gas barrier layer 3 in which the layered inorganic compound is dispersed, for example, first, the above-described main agent and the above-described curing agent are mixed with the above-described layered inorganic compound to prepare a coating composition (hybrid coating composition) as a mixture. Then, the obtained hybrid coating composition is applied to the upper surface of the polyethylene-based first film 1.

In order to prepare a mixture (hybrid coating composition), the layered inorganic compound is first dispersed in water, and then, the above-described main agent and the above-described curing agent are added to a dispersion liquid.

A mixing ratio of the layered inorganic compound is 20 parts by mass or more, preferably 30 parts by mass or more, and for example, 60 parts by mass or less, preferably 50 parts by mass or less with respect to 100 parts by mass of the total amount of the polyurethane dispersion (solid content) and the water-dispersible polyisocyanate (solid content). In the mixture (hybrid coating composition), since there is a possibility of secondary aggregation of the layered inorganic compound, preferably, after dispersing or mixing the layered inorganic compound in a solvent, the dispersion is, for example, carried out by using a mechanical forced dispersion treatment in which the shearing force acts such as a dispersion treatment using a homomixer, a colloidal mill, a jet mill, a kneader, a bead mill, a sand mill, a ball mill, three rolls, an ultrasonic dispersion device, and the like.

Further, an application method of the hybrid coating composition is not particularly limited, and the above-described known coating method is used.

Thereafter, the obtained coating film 2 is dried under the above-described conditions, and then, the polyolefin-based second film 5 is bonded thereto under the above-described conditions, thereby obtaining the laminate 6.

### Examples

The specific numerical values in mixing ratio (content ratio), property value, and parameter used in the following description can be replaced with upper limit values (numerical values defined as "or less" or "below") or lower limit values (numerical values defined as "or more" or "above") of corresponding numerical values in mixing ratio (content ratio), property value, and parameter described in the above-described "DESCRIPTION OF EMBODIMENTS". All designations of "part" or "parts" and "%" mean part or parts by mass and % by mass, respectively, unless otherwise particularly specified in the following description.

### 1. Synthesis of Polyurethane Dispersion

### Synthesis Example 1 (Synthesis of Polyurethane Dispersion 1 (PUD1))

TAKENATE 500 (1,3-bis(isocyanatomethyl)cyclohexane, m-XDI, manufactured by Mitsui Chemicals, Inc.) (170.7 g), 29.8 g of VestanatH₁₂MDI (4,4'-methylenebis(cyclohexylisocyanate), H₁₂MDI, manufactured by EVONIK JAPAN CO., LTD.), 34.3 g of ethylene glycol, 2.6 g of trimethylolpropane, 19.6 g of dimethylolpropionic acid, and 146.2 g of methyl ethyl ketone as a solvent were mixed and reacted at 65 to 70°C under a nitrogen atmosphere until the content of the isocyanate group was 9.53% by mass or less to obtain a transparent isocyanate group-terminated prepolymer reaction solution.

The resulting reaction solution was then cooled to 40°C, followed by neutralization with 14.5 g of triethylamine.

Then, the reaction solution was dispersed in 1142.9 g of ion-exchanged water by a homodisper, and an amine aqueous solution in which 28.6 g of 2-((2-aminoethyl)amino)ethanol was dissolved in 57.1 g of ion-exchanged water was added and subjected to a chain-extension reaction.

Thereafter, the mixture was subjected to an aging reaction for one hour, and the methyl ethyl ketone and the ion-exchanged water were distilled off with an evaporator, and adjusted with the ion-exchanged water so that the solid content concentration was 30% by mass, thereby obtaining a polyurethane dispersion 1 (PUD1).

The total sum of the urethane group concentration and the urea group concentration by the charging calculation of the obtained PUD1 was 39.6% by mass.

### Synthesis Example 2 (Synthesis of Polyurethane Dispersion 2 (PUD2))

TAKENATE 600 (1,3-bis(isocyanatomethyl)cyclohexane, m-H6XDI, manufactured by Mitsui Chemicals, Inc.) (200.2 g), 27.8 g of ethylene glycol, 16.7 g of dimethylol propionic acid, and 72.2 g of acetonitrile as a solvent were mixed, and the mixture was reacted at 65 to 70°C under a nitrogen atmosphere until the content of the isocyanate group was 15.73% by mass or less to obtain a transparent isocyanate group-terminated prepolymer reaction solution.

The obtained reaction solution was then cooled to 40°C, followed by neutralization with 11. 4 g of triethylamine.

Then, the reaction solution was dispersed in 1112.2 g of ion-exchanged water by a homodisper, and an amine aqueous solution in which 43.9 g of 2-((2-aminoethyl)amino)ethanol was dissolved in 87.8 g of ion-exchanged water was added and subjected to a chain-extension reaction.

Thereafter, the mixture was subjected to an aging reaction for one hour, and the methyl ethyl ketone and the ion-exchanged water were distilled off by an evaporator, and adjusted with the ion-exchanged water so that the solid content concentration was 30% by mass, thereby obtaining a polyurethane dispersion 2 (PUD2).

The total sum of the urethane group concentration and the urea group concentration by the charging calculation was 39.6% by mass.

Each of the mixing formulations in Synthesis Example is shown in Table 1.

### [Table 1]

**Table 1**

| No. | | | Synthesis Ex. 1 | Synthesis Ex. 2 |
|---|---|---|---|---|
| Mixing Formulation (parts by mass) | Polyurethane Dispersion | | PUD1 | PUD2 |
| | Polyisocyanate Component | | | |
| | | m-XDI | 170.7 | - |
| | | H₆XDI | - | 200.2 |
| | | H₁₂MDI | 29.8 | - |
| | Polyol Component | | | |
| | | Ethylene Glycol | 34.3 | 27.8 |
| | | Trimethylolpropane | 2.6 | - |
| | | Dimethylol Propionic Acid | 19.6 | 16.7 |
| | Organic Solvent | | | |
| | | MEK | 146.2 | - |
| | | Acetonitrile | - | 72.2 |
| | Content of Isocyanate Group of Isocyanate Group-Terminated Prepolymer | | 9.53 | 15.73 |
| | Neutralizing Agent | | | |
| | | TEA | 14.5 | 11.4 |
| | Ion-Exchanged Water | | 1142.9 | 1112.2 |
| | Chain Extender | | | |
| | | Ion-Exchanged Water | 57.1 | 87.8 |
| | | 2-((2-Aminomethyl)Amino) Ethanol | 28.6 | 43.9 |
| Properties | Solid Content Concentration (% by mass) | | 30 | 30 |
| | Urethane·Urea Group Concentration (% by mass) | | 39.6 | 39.6 |

The details of abbreviations in Table 1 are described below.
m-XDI: TAKENATE 500, 1,3-bis(isocyanatomethyl)cyclohexane, m-XDI, manufactured by Mitsui Chemicals, Inc.
H₆XDI: TAKENATE 600, 1,3-bis(isocyanatomethyl)cyclohexane, 1,3-H₆XDI, manufactured by Mitsui Chemicals, Inc.
H₁₂MDI: VestanatH₁₂MDI, 4,4'-methylenebis(cyclohexylisocyanate), manufactured by EVONIK JAPAN CO., LTD.
MEK: methyl ethyl ketone
TEA: triethylamine

### 2. Preparation of Coating Composition (Preparation Step)

### Preparation Examples 1 to 3

At the ratio described in Table 2, a 2-propanol was added, while the ion-exchanged water was stirred, and furthermore, a polyurethane dispersion (PUD obtained in the above-described Synthesis Example) as a main agent was added thereto and mixed. Then, at the ratio described in Table 2, a water-dispersible isocyanate (trade name: TAKENATE WD-726, manufactured by Mitsui Chemicals, Inc.) as a curing agent and BYK-348 as a leveling agent were added to the obtained liquid mixture, and mixed for five minutes. Thus, a coating composition was obtained.

### Preparation Example 4

At the ratio described in Table 2, a water-swellable mica (NTS-5, manufactured by TOPY INDUSTRIES LIMITED) was added, while the ion-exchanged water was stirred, a 2-propanol was added thereto, and furthermore, a polyurethane dispersion (PUD obtained in the above-described Synthesis Example) as a main agent was added and mixed. Then, at the ratio described in Table 2, a water-dispersible isocyanate (trade name: TAKENATE WD-726, manufactured by Mitsui Chemicals, Inc.) as a curing agent and BYK-348 as a leveling agent were added to the obtained liquid mixture, and mixed for five minutes.

Thus, a coating composition was obtained.

The solid content ratio of each of the coating compositions is shown in Table 2.

### [Table 2]

**Table 2**

| Preparation Example No. | | Preparation Ex. 1 | Preparation Ex. 2 | Preparation Ex. 3 | Preparation Ex. 4 |
|---|---|---|---|---|---|
| Polyurethane Dispersion | PUD1 | 9.19 | - | 9.19 | 5.76 |
| | PUD2 | - | 9.19 | - | - |
| Ion-Exchanged Water | | 4.89 | 4.89 | 4.89 | 2.52 |
| IPA | | 2.68 | 2.68 | 2.68 | 5.76 |
| WD-726 | | 0.35 | 0.35 | 0.09 | 0.21 |
| BYK-348 | | 0.26 | 0.26 | 0.26 | 0.25 |
| Water-Swellable Mica | | - | - | - | 2.87 |

### 3. Production of Laminate

### Example 1

The coating composition of Preparation Example 1 was applied to an LLDPE film having a film thickness of 40 µm as a polyethylene-based first film using a bar coater so that the mass per unit area after drying was 1 g/m², and a coating film was obtained on the upper surface of the LLDPE film (application step). Thereafter, the coating film was dried at 80°C for 10 seconds to form a gas barrier layer (drying step).

Then, as an adhesive, a mixture (TAKELAC A-969V/ TAKENATE A-5/ ethyl acetate= 3/ 1/ 10 (mass ratio)) of TAKELAC A-969V (manufactured by Mitsui Chemicals, Inc), TAKENATE A-5 (manufactured by Mitsui Chemicals, Inc.), and an ethyl acetate was applied to the gas barrier layer with a bar coater so as to have a dry thickness of 3.0 g/m², and dried with a dryer to form an adhesive layer.

Then, an LLDPE film having a film thickness of 40 µm as a polyolefin-based second film was bonded to the adhesive layer and cured at 40°C for two days. Thus, a laminate was obtained (bonding step).

### Examples 2 to 6, Comparative Examples 1 to 4, and Reference Example 1

A laminate was obtained in the same manner as in Example 1, except that the production conditions were changed according to the description in Table 3.

In Comparative Example 1, a coating composition was not used. That is, as an adhesive, a mixture (TAKELAC A-969V/ TAKENATE A-5/ ethyl acetate= 3/ 1/ 10 (mass ratio)) of TAKELAC A-969V (manufactured by Mitsui Chemicals, Inc), TAKENATE A-5 (manufactured by Mitsui Chemicals, Inc.), and an ethyl acetate was applied to the LLDPE film as a polyethylene-based first film with a bar coater so as to have a dry thickness of 3.0 g/m², and dried with a dryer to form an adhesive layer. Then, the LLDPE film as a polyolefin-based second film was bonded to the adhesive layer and cured at 40°C for two days to obtain a laminate.

In addition, in Comparative Example 2, the coating composition could not be sufficiently dried, and an excellent laminate could not be obtained.

In addition, in Comparative Example 4, in the application step, the coating composition was applied so that the mass per unit area after drying was 2 g/m², and in the drying step, the coating composition was heated at 110°C for 10 seconds. Thus, the LLDPE film (polyethylene-based first film) was damaged by heat, and an excellent laminate could not be produced.

### 4. Evaluation

### (Adhesive Properties)

The adhesive properties of the laminate obtained as described above were measured by a T-shaped peel test (15 mm in width) in conformity with JIS K 6854 (1999).

Specifically, first, the LLDPE film (polyethylene-based first film) which was the lowermost layer of the laminate and the LLDPE film (polyolefin-based second film) which was the uppermost layer of the laminate were pulled in an opposite direction from each other, and the LLDPE film (polyethylene-based first film) and the gas barrier layer were slightly peeled off, thereby exposing an interface of these.

Thereafter, the adhesive properties of the interface between the LLDPE substrate and the gas barrier layer were measured in a dry state by the T-shaped peel test described above. The results are shown in Table 3.

### (Drying Properties)

Those with strong tackiness at the time of touching the dried coating film after the application step by hand were evaluated as "Bad", and those with almost no tackiness were evaluated as "Good", and those without tackiness at all were evaluated as "Excellent". The results are shown in Table 3.

### (Oxygen Permeability (Gas Barrier Properties))

The oxygen permeability of the laminate was measured with an oxygen permeability measuring device (manufactured by AMETEK MOCON, OX-TRAN 2/20) at 20°C under the conditions of relative humidity of 80% (80%RH).

An amount of oxygen permeation was measured as the permeation amount per 1 m², one day, and one atmosphere. The results are shown in Table 3.

### [Table 3]

**Table 3**

| Example Comparative Example No. | | | Ex. 1 | Ex. 2 | Ex. 3 | Ex. 4 | Ex. 5 | Ex. 6 | Comparative .Ex. 1 | Comparative .Ex. 2 | Comparative .Ex. 3 | Comparative .Ex. 4 | Reference Ex. 1 |
|---|---|---|---|---|---|---|---|---|---|---|---|---|---|
| Production Conditions | Coating Composition | | Preparation Ex. 1 | Preparation Ex. 1 | Preparation Ex. 2 | Preparation Ex. 2 | Preparation Ex. 4 | Preparation Ex. 4 | - | Preparation Ex. 1 | Preparation Ex. 3 | Preparation Ex. 1 | Preparation Ex. 1 |
| | Polyethylene-Based First Film | | LLDPE-B | LLDPE-B | LLDPE-B | LLDPE-B | LLDPE-A | LLDPE-B | LLDPE-B | LLDPE-B | LLDPE-B | LLDPE-B | OPP |
| | Polyolefin-Based Second Film | | LLDPE | LLDPE | LLDPE | CPP | LLDPE | LLDPE | LLDPE | LLDPE | LLDPE | LLDPE | CPP |
| | Drying Temperature (°C) | | 80 | 80 | 80 | 80 | 80 | 80 | - | 80 | 80 | 110 | 110 |
| | Drying Time (seconds) | | 10 | 10 | 10 | 10 | 10 | 10 | 10 | 10 | 10 | 10 | 60 |
| | Mass per Unit Area of Coated and Dried Product (g/m²) | | 1 | 2 | 2 | 2 | 0.7 | 0.6 | - | 3 | 0.2 | 2 | 2 |
| Evaluation | Adhesive Properties | 180° Adhesive Force (mN/15 mm) | MF | MF | MF | MF | 1.0 | 1.2 | MF | - | 0.1 | - | 1.5 |
| | | T-Shaped Force (mN/15mm) | MF | MF | MF | MF | 1.0 | 1.0 | MF | - | 0.1 | - | 2.1 |
| | Amount of Oxygen Permeation | | 210 | 77 | 180 | 163 | 68 | 70 | >500 | - | >500 | - | 85 |
| | Dryng Properties | | Excellent | Good | Good | Good | Excellent | Excellent | - | Bad | Excellent | - | Good |

The details of abbreviations in Table 3 are described below.
LLDPE-B: Straight-chain low-density polyethylene film having a film thickness of 40 µm
LLDPE: Straight-chain low-density polyethylene film
LLDPE-A: Straight-chain low-density polyethylene film having a film thickness of 50 µm
OPP: biaxially oriented polypropylene film
CPP: unstretched polypropylene film
IPA: 2-propanol
WD-726: TAKENATE WD-726, water-dispersible isocyanate, manufactured by Mitsui Chemicals Inc.
BYK-348: Leveling agent, manufactured by BYK Japan KK
"MF" represents a material breakage of the LLDPE film (polyethylene-based first film), and at least shows excellent adhesive properties between the gas barrier layer and the LLDPE film in the laminate. The numerical value of the strength shows the strength at the interface peeling between the gas barrier layer and the LLDPE film in the laminate.

### 5. Consideration

Example 2, Comparative Example 4, and Reference Example 1 are in common in that the same coating composition is used, and the mass per unit area of the coated and dried product is 2 g/m².

In Reference Example 1, as the first film, an OPP film was used, and a coating film applied to the upper surface of the OPP was heated and dried at 110°C. The OPP film was not damaged by heat at 110°C, and a laminate could be obtained.

On the other hand, in Comparative Example 4, as the first film, an LLDPE film was used, and a coating film applied to the upper surface of the LLDPE film was heated and dried at 110°C. The LLDPE film was damaged by heat at 110°C, and a laminate could not be obtained.

In addition, in Example 2, as the first film, an LLDPE film was used, and a coating film applied to the upper surface of the LLDPE film was heated and dried at 80°C. It was not damaged by heat at 80°C, and an excellent laminate could be obtained.

It has been found from this that when the LLDPE film (polyethylene-based film) is used as the first film instead of the OPP film, an excellent laminate could not be obtained unless the coating composition was heated at a temperature lower than 110°C (specifically, at 80°C).

In addition, in Examples 1 and 2 and Comparative Examples 2 and 3, a laminate is produced under the same production conditions except for the mass per unit area of the coated and dried product.

In Example 1 (1 g/m²) and Example 2 (2 g/m²) in which the mass per unit area of the coated and dried product was 0.5 g/m² or more and 2.5 g/m² or less, a laminate having excellent drying properties at the time of production and having excellent gas barrier properties could be obtained.

On the other hand, in Comparative Example 2 (3 g/m²) in which the mass per unit area of the coated and dried product was above 2.5 g/m², the coating composition could not be sufficiently dried, and the excellent laminate 6 could not be obtained.

In Comparative Example 3 (0.2 g/m²) in which the mass per unit area of the coated and dried product was below 0.5 g/m², though the drying properties at the time of production were excellent, the gas barrier properties of the obtained laminate were low.

It has been found that from this that when the mass per unit area of the coated and dried product was 0.5 g/m² or more and 2.5 g/m² or less, a laminate having excellent drying properties at the time of production and having excellent gas barrier properties could be obtained.

As described above, when the LLDPE film (polyethylene-based film) was used as the first film instead of the OPP film, the drying temperature of the coating composition needed to be lowered (80°C). It has been found that a laminate having excellent drying properties at the time of production and having excellent gas barrier properties could be obtained by setting the mass per unit area of the coated and dried product to 0.5 g/m² or more and 2.5 g/m² or less.

While the illustrative embodiments of the present invention are provided in the above description, such is for illustrative purpose only and it is not to be construed as limiting the scope of the present invention. Modification and variation of the present invention that will be obvious to those skilled in the art is to be covered by the following claims.

### INDUSTRIAL APPLICATION

The laminate and the method for producing a laminate of the present invention are preferably used in packaging materials requiring gas barrier properties, specifically, packaging materials for medicine, food packaging materials, optical films, industrial films, and the like, and above all, are preferably used as food packaging materials.

### DESCRIPTION OF REFERENCE NUMBER

- 1: Polyethylene-based first film
- 2: Coating film
- 3: Gas barrier layer
- 5: Polyolefin-based second film
- 6: Laminate

## Claims

1. A laminate comprising:
a polyethylene-based first film,
a gas barrier layer, and
a polyolefin-based second film in order, wherein
the gas barrier layer is a coated and dried product of a coating composition containing a main agent and a curing agent containing a water-dispersible polyisocyanate, the main agent containing a polyurethane dispersion containing a polyurethane resin which is a reaction product of an isocyanate group-terminated prepolymer which is a reaction product of a polyisocyanate component and a polyol component containing a diol having 2 to 6 carbon atoms and an active hydrogen group-containing compound having a hydrophilic group, and a chain extender,
the mass per unit area of the coated and dried product is 0.5 g/m² or more and 2.5 g/m² or less,
the gas barrier layer is disposed on an upper surface of the first film, and
the second film is disposed on an upper surface of the gas barrier layer, or the second film is disposed on an upper surface of the gas barrier layer via an adhesive layer.

2. The laminate according to claim 1, wherein a polyethylene content in the laminate is 70% or more.

3. A method for producing a laminate comprising:
a preparation step of preparing a coating composition containing a main agent and a curing agent containing a water-dispersible polyisocyanate, the main agent containing a polyurethane dispersion containing a polyurethane resin which is a reaction product of an isocyanate group-terminated prepolymer which is a reaction product of a polyisocyanate component and a polyol component containing a diol having 2 to 6 carbon atoms and an active hydrogen group-containing compound having a hydrophilic group, and a chain extender,
an application step of applying the coating composition obtained in the preparation step to a polyethylene-based first film so that the mass per unit area after drying is 0.5 g/m² or more and 2.5 g/m² or less,
a drying step of obtaining a gas barrier layer by heating a coating film of the coating composition obtained in the application step at 20°C or more and 100°C or less to react the main agent and the curing agent, and
a bonding step of bonding a polyolefin-based second film to the gas barrier layer,
wherein, in the bonding step, the polyolefin-based second film is bonded to an upper surface of the gas barrier layer, or the polyolefin-based second film is bonded to an upper surface of the gas barrier layer via an adhesive layer.

4. The method according to claim 3, wherein a polyethylene content in the laminate is 70% or more.

## Patentansprüche

1. Laminat, umfassend:
einen polyethylenbasierten ersten Film,
eine Gasbarriereschicht und
einen polyolefinbasierten zweiten Film in dieser Reihenfolge, wobei
die Gasbarriereschicht ein beschichtetes und getrocknetes Produkt einer Beschichtungszusammensetzung ist, die ein Hauptmittel und ein Härtungsmittel, enthaltend ein wasserdispergierbares Polyisocyanat, enthält, wobei das Hauptmittel eine Polyurethandispersion enthält, die ein Polyurethanharz enthält, das ein Reaktionsprodukt eines Isocyanatgruppen-terminierten Präpolymers, das ein Reaktionsprodukt einer Polyisocyanatkomponente und einer Polyolkomponente, enthaltend ein Diol mit 2 bis 6 Kohlenstoffatomen und eine eine aktive Wasserstoffgruppe enthaltende Verbindung, die eine hydrophile Gruppe aufweist, ist, und eines Kettenverlängerers ist,
die Masse pro Flächeneinheit des beschichteten und getrockneten Produkts 0,5 g/m² oder mehr und 2,5 g/m² oder weniger beträgt,
die Gasbarriereschicht auf einer oberen Oberfläche des ersten Films angeordnet ist, und
der zweite Film auf einer oberen Oberfläche der Gasbarriereschicht angeordnet ist oder der zweite Film über eine Klebeschicht auf einer oberen Oberfläche der Gasbarriereschicht angeordnet ist.

2. Laminat gemäß Anspruch 1, wobei ein Polyethylengehalt in dem Laminat 70% oder mehr beträgt.

3. Verfahren zur Herstellung eines Laminats, umfassend:
einen Herstellungsschritt des Herstellens einer Beschichtungszusammensetzung, die ein Hauptmittel und ein Härtungsmittel, enthaltend ein wasserdispergierbares Polyisocyanat, enthält, wobei das Hauptmittel eine Polyurethandispersion enthält, die ein Polyurethanharz enthält, das ein Reaktionsprodukt eines Isocyanatgruppen-terminierten Präpolymers, das ein Reaktionsprodukt einer Polyisocyanatkomponente und einer Polyolkomponente, enthaltend ein Diol mit 2 bis 6 Kohlenstoffatomen und eine eine aktive Wasserstoffgruppe enthaltende Verbindung, die eine hydrophile Gruppe aufweist, ist, und eines Kettenverlängerers ist,
einen Aufbringungsschritt des Aufbringens der in dem Herstellungsschritt erhaltenen Beschichtungszusammensetzung auf einen polyethylenbasierten ersten Film, so dass die Masse pro Flächeneinheit nach dem Trocknen 0,5 g/m² oder mehr und 2,5 g/m² oder weniger beträgt,
einen Trocknungsschritt des Erhaltens einer Gasbarriereschicht durch Erhitzen eines Beschichtungsfilms der in dem Aufbringungsschritt erhaltenen Beschichtungszusammensetzung auf 20°C oder mehr und 100°C oder weniger, um das Hauptmittel und das Härtungsmittel reagieren zu lassen, und
einen Bindungsschritt des Bindens eines polyolefinbasierten zweiten Films an die Gasbarriereschicht,
wobei in dem Bindungsschritt der polyolefinbasierte zweite Film an eine obere Oberfläche der Gasbarriereschicht gebunden wird oder der polyolefinbasierte zweite Film über eine Klebeschicht an eine obere Oberfläche der Gasbarriereschicht gebunden wird.

4. Verfahren gemäß Anspruch 3, wobei ein Polyethylengehalt in dem Laminat 70% oder mehr beträgt.

## Revendications

1. Stratifié comprenant, dans cet ordre :
un premier film à base de polyéthylène,
une couche barrière contre les gaz, et
un deuxième film à base de polyoléfine, dans lequel
la couche barrière contre les gaz est un produit revêtu et séché d'une composition de revêtement contenant un agent principal et un agent de durcissement contenant un polyisocyanate dispersible dans l'eau, l'agent principal contenant une dispersion de polyuréthane contenant une résine de polyuréthane qui est un produit de réaction d'un prépolymère terminé par des groupes isocyanate qui est un produit de réaction d'un constituant polyisocyanate et d'un constituant polyol contenant un diol présentant 2 à 6 atomes de carbone et un composé contenant un groupe hydrogène actif présentant un groupe hydrophile, et un agent d'extension de chaîne,
la masse par unité de surface du produit revêtu et séché est de 0,5 g/m² ou plus et de 2,5 g/m² ou moins,
la couche barrière contre les gaz est disposée sur une surface supérieure du premier film, et
le deuxième film est disposé sur une surface supérieure de la couche barrière contre les gaz, ou le deuxième film est disposé sur une surface supérieure de la couche barrière contre les gaz au moyen d'une couche adhésive.

2. Stratifié selon la revendication 1, dans lequel la teneur en polyéthylène dans le stratifié est de 70 % ou plus.

3. Procédé de production d'un stratifié comprenant :
une étape de préparation, consistant à préparer une composition de revêtement contenant un agent principal et un agent de durcissement contenant un polyisocyanate dispersible dans l'eau, l'agent principal contenant une dispersion de polyuréthane contenant une résine de polyuréthane qui est un produit de réaction d'un prépolymère terminé par des groupes isocyanate qui est un produit de réaction d'un constituant polyisocyanate et d'un constituant polyol contenant un diol présentant 2 à 6 atomes de carbone, et un composé contenant un groupe hydrogène actif présentant un groupe hydrophile, et un agent d'extension de chaîne,
une étape d'application, consistant à appliquer la composition de revêtement obtenue à l'étape de préparation sur un premier film à base de polyéthylène de telle sorte que la masse par unité de surface après séchage est de 0,5 g/m² ou plus et de 2,5 g/m² ou moins,
une étape de séchage, consistant à obtenir une couche barrière contre les gaz en chauffant un film de revêtement de la composition de revêtement obtenue à l'étape d'application à 20 °C ou plus et 100 °C ou moins pour faire réagir l'agent principal et l'agent de durcissement, et
une étape de liaison, consistant à lier un deuxième film à base de polyoléfine à la couche barrière contre les gaz,
dans lequel, lors de l'étape de liaison, le deuxième film à base de polyoléfine est lié à une surface supérieure de la couche barrière contre les gaz, ou le deuxième film à base de polyoléfine est lié à une surface supérieure de la couche barrière contre les gaz au moyen d'une couche adhésive.

4. Procédé selon la revendication 3, dans lequel la teneur en polyéthylène dans le stratifié est de 70 % ou plus.
